# EUROPÄISCHE PATENTANMELDUNG

(11) **EP 2 522 413 A1**
(43) Veröffentlichungstag der Anmeldung: **14.11.2012**
(21) Anmeldenummer: 11165472.9
(22) Anmeldetag: 10.05.2011
(51) Int. Cl.: B01D 33/09, B01D 33/66

(54) **Filtereinrichtung, Verfahren zu deren Betrieb sowie deren Verwendung**

(71) Anmelder: SIEMENS AKTIENGESELLSCHAFT, 80333 München (DE)
(72) Erfinder: Peuker, Urs, 09599, Freiberg (DE)

(57) **Zusammenfassung**

Die Erfindung betrifft eine Filtereinrichtung zum Filtrieren einer Suspension, umfassend mindestens einen Filter mit einem Filtergewebe zur kontinuierlichen Erzeugung eines Filterkuchens enthaltend Partikel aus der Suspension, wobei der mindestens eine Filter weiterhin eingerichtet ist, den Filterkuchen nacheinander mindestens einer Dosiereinrichtung zur Aufgabe mindestens einer ersten Waschflüssigkeit auf den Filterkuchen und mindestens einer Bedampfungseinheit zur Bedampfung des Filterkuchens mittels Dampf zuzuführen, und umfassend ein mit dem Filter verbundenes Vakuumsystem zur Erzeugung eines Unterdrucks auf einer der Suspension, der mindestens einen Dosiereinrichtung und der mindestens einen Bedampfungseinheit abgewandten Seite des Filtergewebes, welcher einen Durchtritt von Filtrat umfassend gasförmige und flüssige Filtratbestandteile auf die dem Filterkuchen abgewandte Seite des Filtergewebes bewirkt, wobei zwischen dem mindestens einen Filter und dem Vakuumsystem mindestens eine Wärmetauschereinheit zur Kondensation dampfförmiger Bestandteile aus dem Filtrat angeordnet ist. Die Erfindung betrifft weiterhin ein Verfahren zum Betreiben einer solchen Filtereinrichtung und deren Verwendung.

## Beschreibung

Die Erfindung betrifft eine Filtereinrichtung zum Filtrieren einer Suspension, umfassend mindestens einen Filter mit einem Filtergewebe zur kontinuierlichen Erzeugung eines Filterkuchens enthaltend Partikel aus der Suspension, wobei der mindestens eine Filter weiterhin eingerichtet ist, den Filterkuchen nacheinander mindestens einer Dosiereinrichtung zur Aufgabe mindestens einer ersten Waschflüssigkeit auf den Filterkuchen und mindestens einer Bedampfungseinheit zur Bedampfung des Filterkuchens mittels Dampf zuzuführen, und umfassend ein mit dem Filter verbundenes Vakuumsystem zur Erzeugung eines Unterdrucks auf einer der Suspension, der mindestens einen Dosiereinrichtung und der mindestens einen Bedampfungseinheit abgewandten Seite des Filtergewebes, welcher einen Durchtritt von Filtrat umfassend gasförmige und flüssige Filtratbestandteile auf die dem Filterkuchen abgewandte Seite des Filtergewebes bewirkt. Die Erfindung betrifft weiterhin ein Verfahren zum Betrieb der Filtereinrichtung sowie eine Verwendung der Filtereinrichtung zur Extraktion von Kohlenwasserstoffen aus Ölsand.

Bei einem Ölsand handelt es sich üblicherweise um eine Mischung aus Tonsubstanz, Silikaten, Wasser und Kohlenwasserstoffen. Die in Ölsanden bis zu etwa 18 % enthaltene Ölphase aus diversen Kohlenwasserstoffen weist eine sehr unterschiedliche, oft Abbaugebiet-spezifische Zusammensetzung auf, wobei Bitumen, Rohöl und Asphalt enthalten sein können. Die Aufbereitung von Ölsand wird mit dem Ziel der Trennung der Gesteins- bzw. Sandfraktion umfassend Tonsubstanz und Silikate vom eigentlichen Wertstoff, also der Ölphase umfassend die Kohlenwasserstoffe, durchgeführt.

Der Abbau von Ölsanden erfolgt häufig im Tagebau. Bei einem Abbau aus tieferen Erdschichten erfolgt oft eine Vorbearbeitung, bei der Dampf in die Lagerstätte eingeleitet, die Kohlenwasserstoffe verflüssigt und an Bohrstellen gesammelt und zutage gefördert werden.

Die US 4,240,897 beschreibt ein Verfahren zur Extraktion von Bitumen aus Ölsand mittels heißen Wassers.

Die DE 10 2007 039 453 A1 beschreibt ein Verfahren zur Gewinnung von Bitumen aus Ölsand-Wasser-Mischungen mittels Flotation.

Gemäß dem sogenannten CLARK-ROWE-Prozess wird Ölsand mit Natronlauge gemischt und dadurch die Ölphase mobilisiert. Es erfolgt eine Phasentrennung wässerig-ölig primär durch Flotation. Der verbleibende Gesteins- oder Sandanteil enthält nach der Extraktion noch bis zu 10% der ursprünglich enthaltenen Ölphase, das zum Teil an der Oberfläche der Feinstpartikel adsorptiv gebunden ist. Dies führt zu einer sterischen Stabilisierung dieser Partikel im Abwasserstrom des Prozesses, wodurch eine Abtrennung dieser Partikel stark erschwert ist. Ferner wird eine merkliche Menge an Tonsubstanz durch eine adsorptive Anlagerung der Ölphase so stark hydrophobisiert, dass diese während einer Flotation in das Produkt, d.h. die abgetrennte Ölphase, gelangt. Dort stellt die Tonsubstanz eine qualitätsmindernde Verunreinigung dar, die nur schwer wieder abgeschieden werden kann. Je nach Ölsand-Zusammensetzung wird daher zur Gewinnung eines Barrels an Ölphase etwa die drei- bis vierfache Menge an nicht recycelbarem Frischwasser benötigt. Das Wasser wird mit der abgetrennten Gesteins- oder Sandfraktion in Auffangbecken zwischen- oder endgelagert.

Die US 4,968,412 beschreibt ein zweistufiges Verfahren zur Entfernung von Bitumen aus Ölsand, bei dem in einem ersten Schritt eine Zugabe von organischem Lösungsmittel und eine Abtrennung der Tonsubstanz erfolgen. In einem zweiten Schritt wird eine Waschung des aufbereiteten Ölsands mit Wasser unter Tensid-Zugabe durchgeführt.

Die US 3,542,666 beschreibt ein Verfahren zur Extraktion von Kohlenwasserstoffen aus Ölsand, bei dem organische Lösungsmittel in Kombination mit einer geringen Menge an Wasser in bestimmten Mengenverhältnissen mit dem Ölsand zu einer Suspension vermischt und der pH-Wert der Suspension auf mindestens 5 eingestellt wird, bevor eine Filtration der Suspension erfolgt.

Die nicht vorveröffentlichte europäische Patentanmeldung mit dem Aktenzeichen EP 10156735 beschreibt ein Verfahren zur Extraktion von Kohlenwasserstoffen aus Ölsand. Es hat sich gezeigt, dass eine Verwendung rein organischer Extraktionsmittel dazu führt, dass Feinstbestandteile im Ölsand, die überwiegend aus Tonsubstanz bestehen, agglomerieren und die Agglomerate zudem ein hydrophobes Verhalten zeigen. Dies ermöglicht eine Abtrennung der Tonsubstanz mit der Gesteins- und Sandfraktion mittels einer mechanischen Fest-Flüssig-Filtration. Dabei wird der Ölsand mit organischem Lösungsmittel suspendiert und mittels eines kontinuierlichen Filters umfassend ein Filtergewebe, insbesondere Trommelfilters, filtriert. Der gebildete Filterkuchen wird in einer Filtereinrichtung mittels mindestens einer ersten Waschflüssigkeit gewaschen und anschließend mit einem, aus einer zweiten Waschflüssigkeit gebildeten Dampf bedampft, wobei im Filterkuchen noch vorhandene Reste der ersten Waschflüssigkeit(en) inklusive eventueller Kohlenwasserstoffreste ausgetrieben werden. Der Filterkuchen wird dabei gereinigt und weitgehend entfeuchtet. Dabei kann die Aufgabe der ersten Waschflüssigkeit(en) auf den Filterkuchen mittels einer Dosiereinrichtung erfolgen, die z.B. durch Düsen realisiert ist.

Das Austreiben der Restmenge an erster Waschflüssigkeit aus dem Filterkuchen wird in der Literatur auch als Dampf-Druckfiltration (engl.: Steam Pressure Filtration) bezeichnet.

Die Grundlagen zur Dampf-Druckfiltration sind bekannt und beispielsweise in den folgenden Veröffentlichungen beschrieben:
"Steam Pressure Filtration: Mechanical-Thermal Dewatering Process", U.A. Peuker, W. Stahl, Drying Technology, 19(5), Seiten 807-848 (2001);
"Applying mechanical-thermal filtration processes for purification, e.g. solvent removal", U. A. Peuker, Proc. Filtech Europe, 12.-23. Oktober 2003, Düsseldorf, Deutschland;
"Abtrennung von organischen Lösemitteln aus Filterkuchen mit Dampf", U.A. Peuker, F & S Filtrieren und Separieren, Jahrgang 17 (2003), Nr. 5, Seiten 230 bis 236;
"Steam Pressure Filtration for the treatment of limey soils contaminated with aliphatic hydrocarbons", von M. Bottlinger, H. B. Bradl, A. Krupp, U. Peuker, 2nd Int. Containment & Remediation Technology Conference, 10.-13. Juni 2001, Orlando, Florida, USA.

Der Filterkuchen, umfassend die Gesteins- oder Sandfraktion des Ölsands, wird beim Hindurchdrücken des Dampfs von erster Waschflüssigkeit befreit und eine darin gelöste Menge an Kohlenwasserstoffen bzw. Ölphase damit ausgetrieben. Dies erhöht die Ausbeute an Kohlenwasserstoffen bzw. verbessert den Trennungsgrad auf etwa 95 bis 98 %, welcher den Trennerfolg charakterisiert.

Auf der Seite des Filtergewebes, das der Suspension, der mindestens einen Dosiereinrichtung und der mindestens einen Bedampfungseinheit abgewandt ist, wird der Filter mit einem Vakuumsystem verbunden und ein Unterdruck erzeugt. Ein solches Vakuumsystem umfasst bevorzugt mindestens eine Vakuumpumpe. Aufgrund des Unterdrucks tritt ein Filtrat durch den Filterkuchen und das Filtergewebe hindurch, das sowohl flüssige wie auch gasförmige Filtratbestandteile umfasst. Die gasförmigen Filtratbestandteile enthalten dabei nicht kondensierbare Bestandteile, wie z.B. Luft. Weiterhin umfassen die gasförmigen Filtratbestandteile aber auch kondensierbare dampfförmige Bestandteile, die insbesondere aus verdampften Flüssigkeiten gebildet sind, die aus der Suspension und/oder der mindestens einen ersten Waschflüssigkeit stammen, und weiterhin aus dem, über die Bedampfungseinheit zugeführten Dampf gebildet sind.

Es hat sich gezeigt, dass die kondensierbaren dampfförmigen Bestandteile in das Vakuumsystem gesaugt werden, dort kondensieren und sich mit Schmier-, Dicht- und Funktionsflüssigkeiten, beispielweise von Vakuumpumpen, mischen und deren Funktionsfähigkeit herabsetzen.

Es ist daher Aufgabe der Erfindung, eine Filtereinrichtung zum Filtrieren einer Suspension bereitzustellen, bei der ein Einsaugen von kondensierbaren, dampfförmigen Bestandteilen aus den gasförmigen Filtratbestandteilen in das Vakuumsystem vermieden wird. Weiterhin ist es Aufgabe der Erfindung, ein Verfahren zum Betrieb und eine Verwendung einer solchen Filtereinrichtung anzugeben.

Die Aufgabe wird für die Filtereinrichtung zum Filtrieren einer Suspension, umfassend mindestens einen Filter mit einem Filtergewebe zur kontinuierlichen Erzeugung eines Filterkuchens enthaltend Partikel aus der Suspension, wobei der mindestens eine Filter weiterhin eingerichtet ist, den Filterkuchen nacheinander mindestens einer Dosiereinrichtung zur Aufgabe mindestens einer ersten Waschflüssigkeit auf den Filterkuchen und mindestens einer Bedampfungseinheit zur Bedampfung des Filterkuchens mittels Dampf zuzuführen, und umfassend ein mit dem Filter verbundenes Vakuumsystem zur Erzeugung eines Unterdrucks auf einer der Suspension, der mindestens einen Dosiereinrichtung und der mindestens einen Bedampfungseinheit abgewandten Seite des Filtergewebes, welcher einen Durchtritt von Filtrat umfassend gasförmige und flüssige Filtratbestandteile auf die dem Filterkuchen abgewandte Seite des Filtergewebes bewirkt, dadurch gelöst, dass zwischen dem mindestens einen Filter und dem Vakuumsystem mindestens eine Wärmetauschereinheit zur Kondensation dampfförmiger Bestandteile aus dem Filtrat angeordnet ist.

Die Aufgabe wird für das Verfahren zum Betreiben einer erfindungsgemäßen Filtereinrichtung dadurch gelöst, dass mittels des Vakuumsystems ein Unterdruck auf der, dem Filterkuchen abgewandten Seite des Filtergewebes erzeugt wird, wobei ein Filtrat umfassend gasförmige und flüssige Filtratbestandteile gebildet wird, und wobei dampfförmige Bestandteile der gasförmigen Filtratbestandteile in der mindestens einen Wärmetauschereinheit kondensiert werden.

Die mittels der erfindungsgemäßen Filtereinrichtung und des Verfahrens realisierte Kondensation dampfförmiger Bestandteile aus den gasförmigen Filtratbestandteilen führt zu einer Senkung des Dampfdrucks in der Gasphase, so dass eine technische Schädigung des Vakuumsystems ausgeschlossen ist. Weiterhin entstehen im hyperbaren Druckfiltrationsbetrieb auf diese Weise keine übermäßig großen Mengen an Emissionen.

Als dampfförmige Bestandteile sind in den gasförmigen Filtratbestandteilen folgende zu erwarten:
- der im Bereich der mindestens einen Bedampfungseinheit auf den Filterkuchen aufgegebene Dampf selbst;
- aus dem Filterkuchen mittels des Dampfs ausgetriebene Flüssigkeiten, die durch den Dampf selbst verdampft werden; und
- Dampf, der aufgrund des vorhandenen Dampfdrucks im Bereich Suspension und/oder der mindestens einen ersten Waschflüssigkeit entsteht.

Meist sind die dampfförmigen Bestandteile, die in der mindestens einen Wärmetauschereinheit kondensiert werden sollen, keine Reindämpfe, sondern ein Dampfgemisch aus den oben genannten Dämpfen.

Als geeignete Wärmetauschereinheit kann beispielsweise ein Rohrbündelwärmetauscher, ein Plattenwärmetauscher usw. eingesetzt werden. Aber auch andere Typen von Wärmetauschern sind verwendbar, die in Abhängigkeit der Eigenschaften des anfallenden Filtrats ausgewählt und betrieben werden können.

Ein Einsatz von organischen Lösungsmitteln als erste Waschflüssigkeit(en) und von Wasser als eine zweite Waschflüssigkeit zur Bildung des Dampfs ist besonders bevorzugt. Weiterhin werden auch zur Bildung der zu filtrierenden Suspension bevorzugt ein oder mehrere organische Lösungsmittel eingesetzt. Details hierzu können der eingangs genannten EP 10156735 entnommen werden.

Die Dosiereinrichtung umfasst bevorzugt eine Anzahl an Düsen zur Aufgabe der ersten Waschflüssigkeit(en) auf den Filterkuchen, wobei die Düsen in einer Kammer oder Haube angeordnet sein können. Die auf den Filterkuchen aufgebrachte erste Waschflüssigkeit bildet einen Film, der vorzugsweise entgegen der Filterbewegung strömt.

Zwischen dem mindestens einen Filter und dem Vakuumsystem ist bevorzugt weiterhin mindestens eine Bypass-Leitung zur Abführung der flüssigen Filtratbestandteile an der mindestens einen Wärmetauschereinheit vorbei angeordnet. Dadurch können die ohnehin bereits in flüssigem Zustand vorliegenden flüssigen Filtratbestandteile an der mindestens einen Wärmetauschereinheit vorbeigeschleust werden, so dass die Aufnahmekapazität der mindestens einen Wärmetauschereinheit minimiert werden kann.

Dabei hat es sich bewährt, wenn der Filter derart ausgebildet ist, dass im Bereich der Suspension gebildete flüssige Filtratbestandteile unmittelbar der mindestens einen Bypass-Leitung zuführbar sind.

Weiterhin hat es sich in diesem Zusammenhang als günstig erwiesen, wenn im Bereich der mindestens einen Dosiereinrichtung gebildete flüssige Filtratbestandteile unmittelbar der mindestens einen Bypass-Leitung zuführbar sind.

Vorteilhaft ist es auch, wenn im Bereich der mindestens einen Dosiereinrichtung gebildete gasförmige Filtratbestandteile umfassend dampfförmige Bestandteile des Filtrats und im Bereich der mindestens einen Bedampfungseinheit gebildete gasförmige Filtratbestandteile umfassend dampfförmige Bestandteile des Filtrats unterschiedlichen Wärmetauschereinheiten zuführbar sind. Die in der jeweiligen Wärmetauschereinheit kondensierten Flüssigkeiten liegen dadurch in reinerer Form vor und können, falls erforderlich oder gewünscht, schneller in einzelne Bestandteile getrennt und gegebenenfalls wiederverwertet werden.

Es hat sich bewährt, wenn die im Bereich der mindestens einen Wärmetauschereinheit anfallende Wärmeenergie ausgenutzt wird. Insbesondere ist die mindestens eine Wärmetauschereinheit hierbei zur Erwärmung einer zweiten Waschflüssigkeit eingerichtet, welche über mindestens eine Versorgungsleitung einem Dampferzeuger und in Folge als Dampf der mindestens einen Bedampfungseinheit zuführbar ist. Auf diese Weise wird Energie bei der Bildung des Dampfs eingespart, der auf den Filterkuchen mittels der mindestens einen Bedampfungseinheit aufgegeben wird.

Bei dem erfindungsgemäßen Verfahren wird vorzugsweise mittels der mindestens einen Wärmetauschereinheit die zweite Waschflüssigkeit, insbesondere in Form von Wasser, erwärmt und über die mindestens eine Versorgungsleitung dem Dampferzeuger und in Folge als Dampf, insbesondere als Wasserdampf, der mindestens einen Bedampfungseinheit zugeführt.

Bei einer Verwendung leicht flüchtiger und/oder mittelsiedender Kohlenwasserstoffe als organische Lösungsmittel zur Bildung der Suspension und/oder der mindestens einen ersten Waschflüssigkeit in Kombination mit einer Bedampfung des Filterkuchens mittels Wasserdampf ist mit einer vermehrten Bildung von dampfförmigen Bestandteilen im Filtrat zu rechnen. Diese werden erfindungsgemäß in der mindestens einen Wärmetauschereinheit zuverlässig kondensiert, bevor sie in das Vakuumsystem gesaugt werden können.

In einer bevorzugten Ausgestaltung der erfindungsgemäßen Filtereinrichtung ist der mindestens eine Filter ein Drehfilter. Besonders bevorzugt ist der mindestens eine Filter ein Trommelfilter oder ein Scheibenfilter oder ein Panfilter oder ein Bandfilter.

Die Verwendung der erfindungsgemäßen Filtereinrichtung zur Extraktion von Kohlenwasserstoffen aus Ölsand, wobei aus dem Ölsand und mindestens einem organischen Lösungsmittel die zu filtrierende Suspension gebildet wird, hat sich bewährt.

Zu weiteren Details hierzu wird auf die eingangs genannte EP 10156735 verwiesen.

Die Dicke des gebildeten Filterkuchens liegt bevorzugt im Bereich von 2 bis 100 mm, vorzugsweise im Bereich von 5 bis 25 mm. Ein aus Rückständen von Ölsand gebildeter Filterkuchen ist nach seiner Bedampfung mit Wasserdampf frei von organischen Lösungsmitteln und flüchtigen Kohlenwasserstoffen und kann unmittelbar, z.B. im Bereich der Abbaustelle des Ölsands, ins Erdreich rückverfüllt werden. Eine separate Lagerung der abgetrennten Gesteins- oder Sandfraktion entfällt. Lediglich ein geringer Anteil an schwerflüchtigen Kohlenwasserstoffen kann noch enthalten sein.

Als organisches Lösungsmittel, welches mit dem Ölsand suspendiert wird, wird vorzugsweise ein Gemisch von mindestens zwei unterschiedlichen organischen Lösungsmitteln eingesetzt. Besonders bevorzugt sind hierbei Gemische umfassend mindestens zwei organische Lösungsmittel aus der Gruppe Toluol, Benzol, Heptan und Hexan, aber auch andere organische Lösungsmittel sind hier einsetzbar. Auch ein reines organisches Lösungsmittel, vorzugsweise in Form von Toluol oder Heptan, kann alternativ zusammen mit dem Ölsand zur Bildung der zu filtrierenden Suspension eingesetzt werden. Ebenso ist es möglich, technische Lösungsmittel, wie Paraffin, Naphta, Benzin oder Kerosin mit herstellungsbedingt schwankender chemischer Zusammensetzung einzusetzen.

Die chemische Zusammensetzung der eingesetzten organischen Lösungsmittel und der ersten Waschflüssigkeit(en) wird dabei bevorzugt in Abhängigkeit von einem Gehalt des Ölsands an Molekülen enthaltend ≥ 10 Kohlenstoffatome, insbesondere voluminösen Molekülen aus der Gruppe der Cycloalkane und/oder Naphthensäuren und/oder Asphaltene, ausgewählt. Dazu erfolgt vorzugsweise eine Bestimmung des Gehalts des Ölsands an solchen Molekülen.

Bei einer rein aliphatischen Extraktion hat sich nämlich eine Löslichkeit von derartigen voluminösen Molekülen in einigen organischen Lösungsmitteln als problematisch erwiesen. So fallen beispielsweise bei einem Einsatz von Paraffinen als Extraktionsmittel die Cycloalkane und Naphthensäuren als gelartige Feststoffstrukturen aus. Dies reduziert die Ausbeute und verschlechtert die Prozessierbarkeit der Ölphase.

Die FIGen 1 bis 4 sollen mögliche erfindungsgemäße Filtereinrichtungen und Verfahren für deren Betrieb beispielhaft erläutern. So zeigt
- FIG 1: schematisch eine erste Filtereinrichtung mit einem kontinuierlichen Filter im Schnittbild und mit einer Wärmetauschereinheit;
- FIG 2: schematisch eine zweite Filtereinrichtung mit einem kontinuierlichen Filter im Schnittbild und mit einer Wärmetauschereinheit sowie einer Bypass-Leitung;
- FIG 3: schematisch eine dritte Filtereinrichtung mit einem kontinuierlichen Filter im Schnittbild und einer Wärmetauschereinheit sowie einem Kondensatphasentrenner; und
- FIG 4: schematisch eine vierte Filtereinrichtung mit einem kontinuierlichen Filter im Schnittbild und zwei Wärmetauschereinheiten.

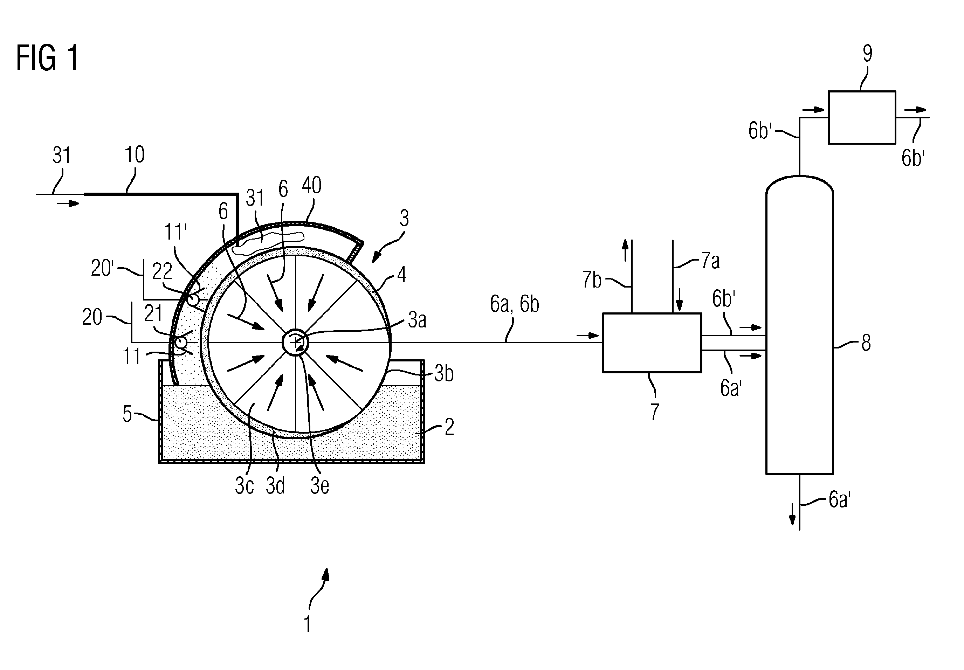

FIG 1 zeigt schematisch eine erste Filtereinrichtung 1 mit einem kontinuierlichen Filter 3 zum Filtrieren einer Suspension 2 im Schnittbild und mit einer Wärmetauschereinheit 7. Die Filtereinrichtung 1 umfasst hier einen Behälter 5 zur Aufnahme der Suspension 2 sowie einen Filter 3 in Form eines kontinuierlichen Drehfilters. Der Drehfilter ist hier eine mit Filtergewebe 3b bespannte Trommel 3d, also ein Trommelfilter, mit mehreren, voneinander getrennten Filterkammern 3c. Der Trommelfilter taucht in die Suspension 2 ein und wird in Pfeilrichtung um eine Drehachse 3a rotiert (siehe Pfeil), wobei zumindest in einem Teil der Filterkammern 3c ein Druck herrscht, der geringer ist als jener oberhalb des Filtergewebes 3b. Dieser Unterdruck wird durch ein Vakuumsystem 9 umfassend eine Vakuumpumpe erzeugt. Dadurch wird Flüssigkeit aus der Suspension 2 durch das Filtergewebe 3b in die jeweilige Filterkammer 3c abgesaugt und es bildet sich auf dem Filtergewebe 3b ein Filterkuchen 4 aus, dessen Dicke mit zunehmender Verweilzeit des Filtergewebes 3b in der Suspension 2 zunimmt. Der Filterkuchen 4 umfasst filtrierbare Partikel der Suspension 2. Bei Einsatz einer Suspension 2, die beispielsweise aus Ölsand und organischen Lösungsmitteln gebildet ist, enthält der Filterkuchen 4 Tonsubstanz-Agglomerate sowie sonstige Partikel der Gesteins- und Sandfraktion des Ölsands. Es wird ein Filtrat 6 umfassend Kohlenwasserstoffe aus dem Ölsand und organische Lösungsmittel abgetrennt und im Bereich der Drehachse 3a des Trommelfilters über einen Steuerkopf 3e aus den Filterkammern 3c abgeführt.

Der Filterkuchen 4 gelangt nach dem Austritt aus der Suspension 2 zuerst in den Bereich einer Dosiereinrichtung 20, 20' umfassend Düsen 21, 22 zur Aufgabe mindestens einer ersten Waschflüssigkeit 11, 11' auf den Filterkuchen 4.

Danach wird der Filterkuchen 4 aufgrund der Drehbewegung der Trommel 3d einer Bedampfungseinheit 10 zur Bedampfung des Filterkuchens 4 mittels Dampf 31 zugeführt. Die Bedampfungseinheit 10 ist hier in Form eines Rohrs zur Dampfzuführung ausgeführt und in eine Haube 40 integriert.

Mittels der Dosiereinrichtung 20, 20' wird hier über die Düsen 21, 22 als erste Waschflüssigkeit 11, 11' ein organisches Lösungsmittel, beispielsweise aus einer Mischung von Toluol und Heptan, auf einer dem Filtergewebe 3b abgewandten Seite auf den Filterkuchen 4 aufgegeben. Die erste Waschflüssigkeit 11 verdrängt eine Restmenge an organischem Lösungsmittel, mit welchem die Suspension 2 gebildet wurde, aus dem offenen Porenraum des Filterkuchens 4. Mittels der Dosiereinrichtung 20, 20' werden bevorzugt mehrere unterschiedliche erste Waschflüssigkeiten 11, 11' nacheinander auf den Filterkuchen 4 aufgebracht. Der Filterkuchen 4 wird beispielsweise auf seiner dem Filtergewebe 3b abgewandten Seite zuerst mittels der Düsen 21 mit einer ersten Waschflüssigkeit 11, gebildet aus einer Mischung von Toluol und Heptan, und anschließend mittels der Düsen 22 mit einer weiteren ersten Waschflüssigkeit 11', aus reinem Hexan oder Heptan, beaufschlagt.

Die Haube 40 umgibt einen Teil des Trommelfilters. Der Dampf 31, hier in Form von Wasserdampf, wird über dem Filterkuchen 4 in die Haube 40 eingeleitet und durch diesen hindurch abgesaugt. Dabei wird eine, sich noch im Filterkuchen 4 befindende Restmenge an erster Waschflüssigkeit, umfassend aus dem Ölsand stammende Reste von Kohlenwasserstoffen, entfernt. Der Dampf 31 wird durch den Filterkuchen 4 gedrückt und der Filterkuchen 4 dabei entfeuchtet.

Die jeweils in die Filterkammern 3c eindringenden Mengen an Filtrat 6 werden im Bereich der Drehachse 3a gesammelt und aus der ersten Filtereinrichtung 1 mittels einer hier nicht im Detail dargestellten Einheit, beispielsweise in Form eines Rohres, über den Steuerkopf 3e abgeführt. Als Filterrückstand verbleibt ein weitgehend entfeuchteter, lösemittelfreier Filterkuchen 4, der vom Filtergewebe 3b beispielsweise durch Druckluft und/oder einen mechanischen Abstreifer entfernt und z.B. am Abbauort des verarbeiteten Ölsands ins Erdreich rückverfüllt werden kann. Dieses Abnehmen des Filterkuchens 4 vom Filtergewebe 3b ist hier der Übersichtlichkeit halber nicht im Detail dargestellt.

Das mittels der ersten Filtereinrichtung 1 gewonnene Filtrat 6 umfasst flüssige Filtratbestandteile 6a wie auch gasförmige Filtratbestandteile 6b. Dabei umfassen die gasförmigen Filtratbestandteile 6b einerseits nicht kondensierbare Gase, wie z.B. Luft oder andere Schutzgase, und andererseits kondensierbare dampfförmige Bestandteile. Das komplette, innerhalb des Filters 3 gewonnene Filtrat 6 wird hier einer Wärmetauschereinheit 7 zugeführt, die durch ein Wärmeaustauschmittel 7a, 7b gekühlt wird. Innerhalb der Wärmetauschereinheit 7 kondensieren die kondensierbaren, dampfförmigen Bestandteile der gasförmigen Filtratbestandteile 6b und mischen sich mit den flüssigen Filtratbestandteilen 6a. Die aus der Wärmetauschereinheit 7 abgeführte flüssige Phase 6a' enthält somit die flüssigen Filtratbestandteile 6a und die kondensierten dampfförmigen Bestandteile aus den gasförmigen Filtratbestandteilen 6b.

Die aus der Wärmetauschereinheit 7 abgeführte gasförmige Phase 6b' enthält lediglich nicht kondensierbare Gase. Die flüssige Phase 6a' wie auch die gasförmige Phase 6b' werden einem Kondensatsammler 8 zugeführt. Der Kondensatsammler 8 ist an seiner Oberseite mit dem Vakuumsystem 9 verbunden, über welches die gasförmige Phase 6b' abgesaugt wird, und weist unten einen Auslass für die flüssige Phase 6a' auf.

Die flüssige Phase 6a' wird z.B. zu einer Aufbereitungsanlage gefördert, welche die aus dem Ölsand extrahierten Kohlenwasserstoffe abtrennt und die eingesetzten organischen Lösungsmittel sortenrein trennt. Die sortenrein zurückgewonnenen Lösungsmittel können wiederverwendet werden. Dies ist hier allerdings der Übersichtlichkeit halber nicht im Detail dargestellt. Es wird hierzu auf den Inhalt der EP 10156735 verwiesen.

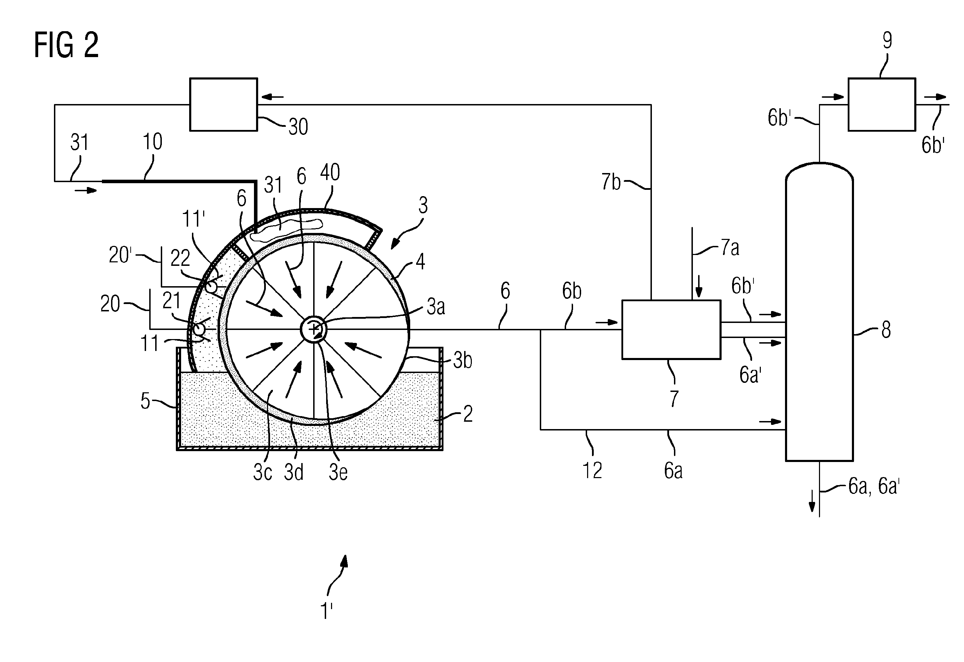

FIG 2 zeigt eine zweite Filtereinrichtung 1' ähnlich zu der in FIG 1, bei welcher eine Bypass-Leitung 12 vorhanden ist, über welche die flüssigen Filtratbestandteile 6a direkt in den Kondensatsammler 8 abfließen können. Gleiche Bezugszeichen wie in FIG 1 bezeichnen gleiche Elemente. Lediglich die gasförmigen Filtratbestandteile 6b werden über die Wärmetauschereinheit 7 geleitet und enthaltene kondensierbare dampfförmige Bestandteile gekühlt und kondensiert. Die entstehende flüssige Phase 6a' vermischt sich im Kondensatsammler 8 mit den flüssigen Filtratbestandteilen 6a. Die verbliebene gasförmige Phase 6b', die keine kondensierbaren Dämpfe mehr umfasst, wird über das Vakuumsystem 9 aus dem Kondensatsammler 8 abgesaugt.

Als Wärmetauschermedium 7a wird hier kaltes Wasser eingesetzt, das in der Wärmetauschereinheit 7 erwärmt und als erwärmtes Wärmetauschermedium 7b in Form von warmem Wasser wieder abgeführt wird. Das warme Wasser wird hier einem Dampferzeuger 30 zugeführt, der daraus Dampf 31 erzeugt und der Bedampfungseinheit 10 zuführt. Während in FIG 1 die Haube 40 sowohl die Dosiereinrichtung 20, 20' wie auch die Bedampfungseinheit 10 beherbergt, ist die Haube 40 hier mittels einer Trennwand in einen Waschbereich und einen Bedampfungsbereich unterteilt.

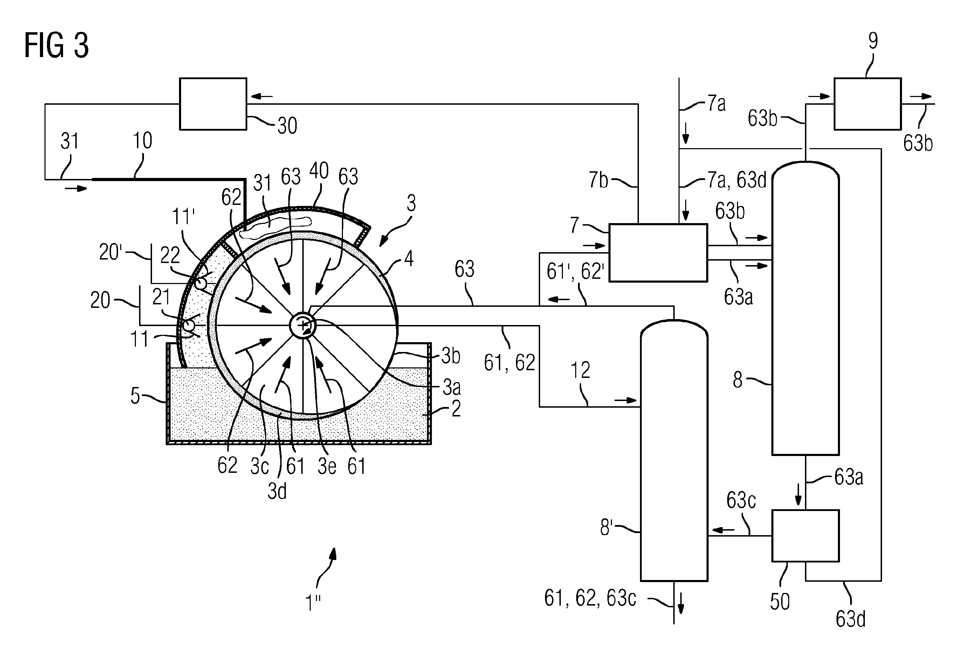

FIG 3 zeigt eine dritte Filtereinrichtung 1´´ ähnlich zu der in FIG 2. Gleiche Bezugszeichen wie in FIG 2 bezeichnen gleiche Elemente. Allerdings wird hier im Bereich des Steuerkopfs 3e eine Trennung eines ersten Filtrats 61 aus dem Bereich mit Suspension 2 und eines zweiten Filtrats 62 aus dem Waschbereich einerseits von andererseits einem dritten Filtrat 63 im Bedampfungsbereich, in welchem Dampf 31 in Form von Wasserdampf eingebracht wird, vorgenommen. Das erste Filtrat 61 und zweite Filtrat 62 liegen in der Regel flüssig vor und werden direkt einem weiteren Kondensatsammler 8' zugeführt. Sich dabei gegebenenfalls noch bildende oder bereits vorhandene gasförmige Filtratbestandteile 61', 62' werden aus dem weiteren Kondensatsammler 8' in Richtung Vakuumsystem 9 abgesaugt.

Lediglich das dritte Filtrat 63 umfassend vorwiegend gasförmige Filtratbestandteile wird über die Wärmetauschereinheit 7 geführt und die enthaltenen kondensierbaren, dampfförmigen Bestandteile kondensiert. Die aus der Wärmetauschereinheit 7 austretende flüssige Phase 63a und die gasförmige Phase 63b ohne kondensierbare Dampfbestandteile werden in den Kondensatsammler 8 überführt, der ebenfalls mit dem Vakuumsystem 9 verbunden ist. Während die gasförmige Phase 63b abgesaugt wird, wird die flüssige Phase 63a in einen Kondensatphasentrenner 50 überführt, in welchem das enthaltene Wasser 63d aus dem Wasserdampf von den weiterhin enthaltenen organischen Lösungsmitteln 63c abgetrennt wird. Das Wasser 63d wird dem Wärmetauschermedium 7a, hier in Form von kaltem Wasser, zugegeben, in der Wärmetauschereinheit 7 erwärmt und schließlich als erwärmtes Wärmetauschermedium 7b dem Dampferzeuger 30 zugeführt. Die organischen Lösungsmittel 63c werden in den weiteren Kondensatabscheider 8' überführt und dem ersten Filtrat 61 und zweiten Filtrat 62 zugegeben und anschließend weiterverarbeitet.

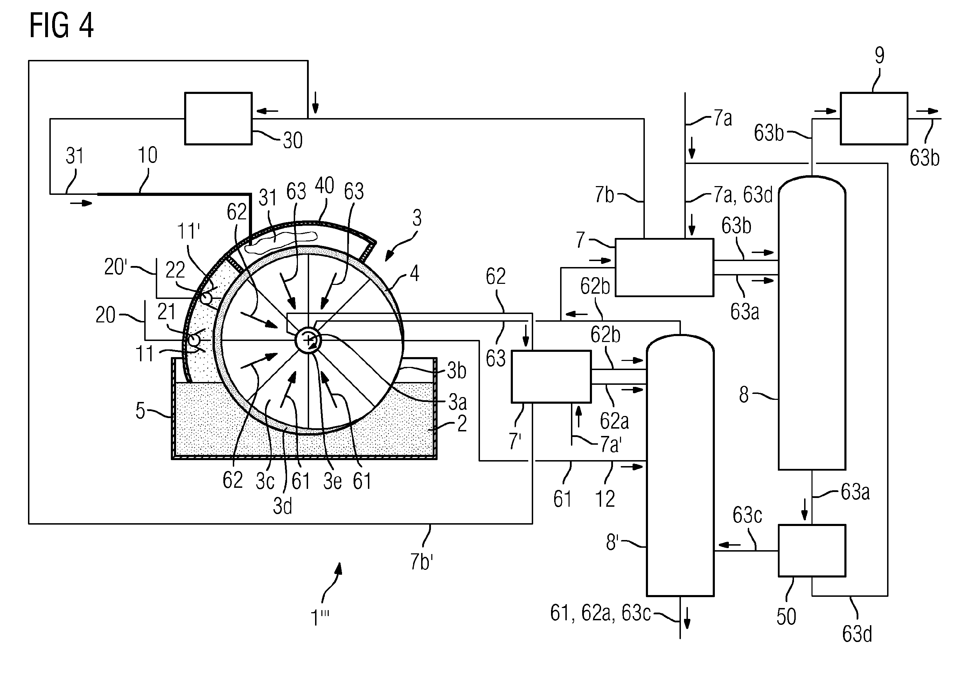

FIG 4 zeigt schematisch eine vierte Filtrationseinrichtung 1´´´ ähnlich zu FIG 3. Gleiche Bezugszeichen kennzeichnen gleiche Elemente. Hier werden im Unterschied zu FIG 3 das erste Filtrat 61, das zweite Filtrat 62 und das dritte Filtrat 63 getrennt über den Steuerkopf 3e aus dem Filter 3 abgeführt. Dabei erfolgt die Verarbeitung des ersten Filtrats 61 und des dritten Filtrats 63 im Prinzip wie bereits in FIG 3 dargestellt. Allerdings wird das zweite Filtrat 62 hier einer weiteren Wärmetauschereinheit 7' zugeführt, welcher ein weiteres Wärmetauschermedium 7a' zugeführt wird. Gegebenenfalls im zweiten Filtrat 62 enthaltene dampfförmige Bestandteile der gasförmigen Filtratbestandteile werden in der weiteren Wärmetauschereinheit 7' kondensiert. Die nach der weiteren Wärmetauschereinheit 7' vorliegende flüssige Phase 62a, die flüssige Filtratbestandteile des zweiten Filtrats 62 sowie das Kondensat beinhaltet, wird dem weiteren Kondensatsammler 8´ zugeführt. Die gasförmige Phase 62b wird ebenfalls dem Kondensatsammler 8´ zugeführt und aus diesem in Richtung Vakuumsystem 9 abgesaugt, wobei es auf seinem Weg mit dem dritten Filtrat 63 zusammengeführt und mit diesem in die Wärmetauschereinheit 7 überführt wird.

Die FIGen 1 bis 4 zeigen lediglich Beispiele für mögliche erfindungsgemäße Filtereinrichtungen und Verfahren zu deren Betrieb. Ein Fachmann ist beispielsweise ohne weiteres in der Lage, anstelle des hier beispielhaft gezeigten Trommelfilters einen Bandfilter, Scheibenfilter oder anderen Drehfilter einzusetzen.

## Patentansprüche

1. Filtereinrichtung (1, 1´, 1´´, 1´´´) zum Filtrieren einer Suspension (2), umfassend mindestens einen Filter (3) mit einem Filtergewebe (3b) zur kontinuierlichen Erzeugung eines Filterkuchens (4) enthaltend Partikel aus der Suspension (2), wobei der mindestens eine Filter (3) weiterhin eingerichtet ist, den Filterkuchen (4) nacheinander mindestens einer Dosiereinrichtung (20,20') zur Aufgabe mindestens einer ersten Waschflüssigkeit (11,11´) auf den Filterkuchen (4) und mindestens einer Bedampfungseinheit (10) zur Bedampfung des Filterkuchens (4) mittels Dampf (31) zuzuführen, und umfassend ein mit dem Filter (3) verbundenes Vakuumsystem (9) zur Erzeugung eines Unterdrucks auf einer der Suspension (2), der mindestens einen Dosiereinrichtung (20,20') und der mindestens einen Bedampfungseinheit (10) abgewandten Seite des Filtergewebes (3b), welcher einen Durchtritt von Filtrat (6) umfassend gasförmige und flüssige Filtratbestandteile auf die dem Filterkuchen (4) abgewandte Seite des Filtergewebes (3b) bewirkt, **dadurch gekennzeichnet, dass** zwischen dem mindestens einen Filter (3) und dem Vakuumsystem (9) mindestens eine Wärmetauschereinheit (7,7') zur Kondensation dampfförmiger Bestandteile aus dem Filtrat (6) angeordnet ist.

2. Filtereinrichtung nach Anspruch 1, **dadurch gekennzeichnet, dass** zwischen dem mindestens einen Filter (3) und dem Vakuumsystem (9) weiterhin mindestens eine Bypass-Leitung (12) zur Abführung der flüssigen Filtratbestandteile an der mindestens einen Wärmetauschereinheit (7,7') vorbei angeordnet ist.

3. Filtereinrichtung nach Anspruch 2, **dadurch gekennzeichnet, dass** der Filter (3) derart ausgebildet ist, dass im Bereich der Suspension (2) gebildete flüssige Filtratbestandteile unmittelbar der mindestens einen Bypass-Leitung (12) zuführbar sind.

4. Filtereinrichtung nach einem der Ansprüche 2 oder 3, **dadurch gekennzeichnet, dass** im Bereich der mindestens einen Dosiereinrichtung (20,20') gebildete flüssige Filtratbestandteile unmittelbar der mindestens einen Bypass-Leitung (12) zuführbar sind.

5. Filtereinrichtung nach einem der Ansprüche 1 bis 4, **dadurch gekennzeichnet, dass** im Bereich der mindestens einen Dosiereinrichtung (20,20') gebildete gasförmige Filtratbestandteile umfassend dampfförmige Bestandteile und im Bereich der mindestens einen Bedampfungseinheit (10) gebildete gasförmige Filtratbestandteile umfassend dampfförmige Bestandteile unterschiedlichen Wärmetauschereinheiten (7,7') zuführbar sind.

6. Filtereinrichtung nach einem der Ansprüche 1 bis 5, **dadurch gekennzeichnet, dass** die mindestens eine Wärmetauschereinheit (7,7') zur Erwärmung einer zweiten Waschflüssigkeit eingerichtet ist, welche über mindestens eine Versorgungsleitung einem Dampferzeuger (30) und in Folge als Dampf (31) der mindestens einen Bedampfungseinheit (10) zuführbar ist.

7. Filtereinrichtung nach einem der Ansprüche 1 bis 6, **dadurch gekennzeichnet, dass** der mindestens eine Filter (3) ein Drehfilter ist.

8. Filtereinrichtung nach einem der Ansprüche 1 bis 7, **dadurch gekennzeichnet, dass** der mindestens eine Filter (3) ein Trommelfilter oder ein Scheibenfilter oder ein Panfilter oder ein Bandfilter ist.

9. Verfahren zum Betreiben einer Filtereinrichtung (1, 1´, 1´´, 1´´´) nach einem der Ansprüche 1 bis 8, **dadurch gekennzeichnet, dass** mittels des Vakuumsystems (9) ein Unterdruck auf der dem Filterkuchen (4) abgewandten Seite des Filtergewebes (3b) erzeugt wird, wobei ein Filtrat (6) umfassend gasförmige und flüssige Filtratbestandteile gebildet wird, und wobei dampfförmige Bestandteile der gasförmigen Filtratbestandteile in der mindestens einen Wärmetauschereinheit (7, 7´) kondensiert werden.

10. Verfahren nach Anspruch 9, **dadurch gekennzeichnet, dass** mittels der mindestens einen Wärmetauschereinheit (7, 7') eine zweite Waschflüssigkeit, insbesondere in Form von Wasser, erwärmt wird, über die mindestens eine Versorgungsleitung einem Dampferzeuger (30) und in Folge als Dampf (31), insbesondere als Wasserdampf, der mindestens einen Bedampfungseinheit (10) zugeführt wird.

11. Verfahren nach einem der Ansprüche 9 oder 10, **dadurch gekennzeichnet, dass** als die mindestens eine erste Waschflüssigkeit (11, 11´) mindestens ein organisches Lösungsmittel auf den Filterkuchen (4) aufgegeben wird.

12. Verwendung einer Filtereinrichtung (1, 1´, 1´´, 1´´´) nach einem der Ansprüche 1 bis 8 zur Extraktion von Kohlenwasserstoffen aus Ölsand, wobei aus dem Ölsand und mindestens einem organischen Lösungsmittel die zu filtrierende Suspension (2) gebildet wird.
